(19) Europäisches Patentamt
European Patent Office
Office européen des brevets

(11) **EP 2 796 276 A1**

(12) **EUROPEAN PATENT APPLICATION**
published in accordance with Art. 153(4) EPC

(43) Date of publication:
**29.10.2014 Bulletin 2014/44**

(21) Application number: **12859414.0**

(22) Date of filing: **20.12.2012**

(51) Int Cl.:
**B29C 70/06** (2006.01)    **B29C 43/34** (2006.01)
**C08J 5/24** (2006.01)

(86) International application number:
**PCT/JP2012/083131**

(87) International publication number:
**WO 2013/094702 (27.06.2013 Gazette 2013/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2011 JP 2011281508**

(71) Applicant: **Teijin Limited
Osaka-shi, Osaka 541-0054 (JP)**

(72) Inventors:
• **NAGAKURA Yasunori
Matsuyama-shi
Ehime 791-8044 (JP)**

• **YOKOE, Yasuyuki
Matsuyama-shi
Ehime 791-8044 (JP)**
• **KONDOU, Yutaka
Matsuyama-shi
Ehime 791-8044 (JP)**
• **ARAKAWA, Motoomi
Matsuyama-shi
Ehime 791-8044 (JP)**

(74) Representative: **Carpmaels & Ransford LLP
One Southampton Row
London WC1B 5HA (GB)**

(54) **METHOD FOR PRODUCING MOLDED ARTICLE AND MOLDED ARTICLE**

(57)    A method for manufacturing a shaped product, in which a wide variety of thermoplastic resins can be used, productivity is excellent and appearance and strength of a welded part are improved without deteriorating fluidity of a prepreg during a press molding is provided.

A method for manufacturing a shaped product, including 1) heating at least three prepregs having a thickness of 0.3 mm to 5.0 mm each including reinforcing fibers having an average fiber length of 3 to 100 mm and a thermoplastic resin, 2) arranging those prepregs so as to constitute at least two layers including P layer and Q layer which are in contact with each other, and 3) then pressing those layers to manufacture one shaped product, wherein a prepreg (p1) in the P layer and a prepreg (q1) in the Q layer are arranged such that at least a part thereof overlaps with each other, and two or more prepregs in the same layer are arranged so as not to be in contact with each other.

FIG.2

Printed by Jouve, 75001 PARIS (FR)

**Description**

Technical Field

The present invention relates to a method for manufacturing a shaped product constituted by layering a plurality of prepregs including a reinforcing fiber and a thermoplastic resin, and the method makes it possible to improve and control weld strength in the state of maintaining high flowability of prepregs.

Background Art

A representative molding technique of shaping a composite material of a reinforcing fiber and a thermoplastic resin by pressing includes a cold press method. This method can obtain a shaped product by previously heating a material having a certain size to a molten state by an infrared heater or the like, and pressing the material in a mold to fluidize the material. However, this method had the problems that the material is arranged on places of two or more sites, and in the site where the materials collide with each other (hereinafter referred to as "weld" or "welded part"), surface quality of a shaped product is deteriorated and properties are extremely deteriorated.

In a case where a size of a shaped product is small, a shaped product can be manufactured so as not to form a welded part by an arrangement method of a material. However, with increasing a size of a shaped product, a welded part becomes unavoidable. Various investigations have been made as an improvement method of surface quality and strength of a welded part.

Patent Document 1 intends to improve strength of a welded part by using a thermoplastic resin having a specific composition. However, it has the problem that the composition of the thermoplastic resin that can be utilized is limited, and cannot be applied to the molding in other resin systems.

Patent Document 2 is to improve appearance of a welded part by subjecting to a surface texturing to a surface of a molded product, and is characterized in that a shaped product molded by injection molding is re-melted in a press mold with an ultrasonic vibration apparatus. However, this method requires two steps, and thus has a problem in productivity.

Citation List

Patent Documents

Patent Document 1: JP-A-2007-291161
Patent Document 2: JP-A-2011-56795

Summery of Invention

Problems to be Solved by Invention

In a case of conducting the molding for forming a welded part in a shaped product by fluidizing a molding material such as a prepreg in a press molding, deterioration in strength of the welded part and poor appearance are a problem, and where molding is conducted so as not to form a welded part, the problem remains that fluidity is deteriorated. The present invention provides a method for manufacturing a shaped product, which improves those problems.

That is, an object of the present invention is to provide a method for manufacturing a shaped product, in which a wide variety of thermoplastic resins can be used, productivity is excellent, and appearance and strength of a welded part are improved without deteriorating fluidity of a prepreg during a press molding.

Means for Solving the Problems

The present inventors have reached the present invention by using a specific prepreg and layering a plurality of the prepregs in a form of two or more layers by a specific arrangement manner.

That is, the present invention relates to a method for manufacturing a shaped product, including 1) heating at least three prepregs having a thickness of 0.3 mm to 5.0 mm, each including reinforcing fibers having an average fiber length of 3 to 100 mm and a thermoplastic resin, 2) arranging those prepregs so as to constitute at least two layers including P layer and Q layer which contact with each other, and 3) then pressing those layers to manufacture one shaped product, wherein a prepreg (p1) in the P layer and a prepreg (q1) in the Q layer are arranged such that at least a part thereof overlaps with each other.

Advantage of the Invention

According to the present invention, there can be provided a shaped product and a method for manufacturing the shaped product, in which a wide variety of thermoplastic resins can be used, productivity is excellent, a welded part is formed at an optional place of the shaped product without deteriorating fluidity of a prepreg during a press molding, an appearance of the welded part is improved and strength of the welded part is excellent.

Further, because appearance and strength of the welded part can be improved by the present invention, a large-sized shape product can be manufactured.

Additionally, it becomes possible to arbitrarily alter and control strength of the welded part in a desired portion by the present invention. Therefore, it is also possible to manufacture a shaped product having characteristics extremely suitable or use in a hood of a car, an air-bag cover, and the like, because in a case where a shaped product is strongly shocked, breakage occurs at an optional place (the welded part) and in a general use, the place has sufficient strength.

Brief Description of Drawings

Fig. 1 is schematic views (sectional views) indicating specific examples of the arrangement method of prepregs in the present invention.

Fig. 2 is arrangement views (sectional view and top view) of prepregs molded in Example 1.

Fig. 3 is arrangement views (sectional view and top view) of prepregs molded in Examples 2, 6 and 7.

Fig. 4 is arrangement views (sectional view and top view) of prepregs molded in Example 3.

Fig. 5 is arrangement views (sectional view and top view) of prepregs molded in Example 4.

Fig. 6 is arrangement views (sectional view and top view) of prepregs molded in Example 5.

Fig. 7 is arrangement views (sectional view and top view) of prepregs molded in Comparative Example 1.

Fig. 8 is arrangement views (sectional view and top view) of prepregs molded in Comparative Example 2.

Description of Embodiments

[Arrangement method of prepregs]

In the prevent invention, prepregs are arranged so as to constitute at least two layers being in contact with each other. In the present invention, those two layers are called P layer and Q layer. In the present invention, the number of layered prepregs is not particularly limited so long as the number of layered prepregs including the P layer and Q layer is two or more layers. The number of the layered prepregs is preferably 2 to 8, more preferably 3 or more, and still more preferably 3 to 8. When the number of layered pregregs is 8 layers or less, the layering does not require much time and prepregs are difficult to radiate heat. As a result, a good shaped product is liable to be obtained, and this is preferred.

Furthermore, a prepreg (p1) in the P layer and a prepreg (q1) in the Q layer are arranged so as to overlap with each other, and in a case where two or more prepregs (for example, in the P layer, p1, p2, ...) are present in the same layer, it is necessary that those prepregs (p1, p2, ...) are arranged so as not to be in contact with each other. In a case where all adjacent prepregs have been in contact or overlapped with each other in the same layer, such a constitution does not meet the object of the present invention.

The term "layer" used herein means a height (thickness) region of one prepreg.

Furthermore, the term "the same layer" means one layer, and the term that "two or more prepregs are present in the same layer" means that two or more prepregs are present in one layer.

In the manufacturing method of the present invention, it is preferred that two or more prepregs arranged so as not to be in contact with each other in the same layer fluidize during a pressing (molding) by arranging the prepregs as described above. The prepreg constituting the P layer or Q layer by only one prepreg as well may fluidize during press molding. In other words, both a layer in which two or more prepregs have been arranged so as not to be in contact with each other and a layer constituted by one prepreg may fluidize.

It is preferred in the manufacturing method of the present invention that by arranging two or more prepregs in the same layer so as not to be in contact with each other as above, the prepregs are fluidized during a pressing and a welded part is formed in the shaped product. When a welded part is thus formed, a shaped product suitable for use in applications, the shaped product having the characteristics as previously described is obtained, and this is preferred. Each prepreg fluidizes during a pressing, a plurality of flows of molten prepregs is generated in a mold, and a site at which those flows join together constitutes a welded part. A shape and an arrangement of two or more prepregs are adjusted, and a welded part can be formed at an optional site of a shaped product.

The number of prepregs present in the same layer is preferably 2 to 10 sheets, and more preferably 2 to 4 sheets. When the number of prepregs being present in the same layer is 10 sheets or less, the number of occurrence sites of a welded part is not increased. Therefore, control of strength which is the advantage of the present invention is liable to conduct, and this is preferred.

Preferred examples of the arrangement of layer constitution using P layer and Q layer include (a) an arrangement in which the P layer uses one prepreg, the Q layer uses at least two prepregs, and those prepregs are arranged so as to constitute two or more layers as a whole, (b) an arrangement in which the P layer uses one prepreg, the Q layer uses at least two prepregs, and those prepregs are arranged so as to constitute three or more layers as a whole, (c) an arrangement in which the P layer uses at least two prepregs, the Q layer uses one prepreg, and those prepregs are arranged so as to constitute three or more layers as a whole, and (d) an arrangement in which the P layer uses at least two prepregs, the Q layer uses at least two prepregs, and those prepregs are arranged so as to constitute three or more layers as a whole.

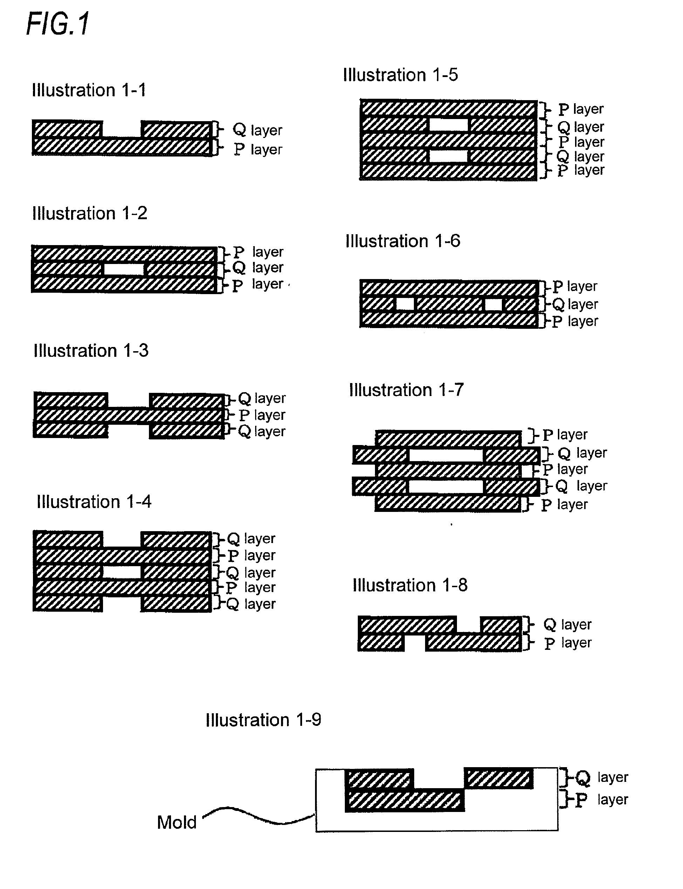

Specifically, the arrangement methods as shown in Illustrations 1-1 to 1-9 in Fig. 1 can be employed, but the invention is not construed as being limited to those. In the present invention, the expression of "P layer" and "Q layer" is to merely distinguish each layer. As shown in Illustration 1-1 and the like, in the arrangement method using the layer constituted by one prepreg, the P layer is a layer constituted by one prepreg and the Q layer is a layer constituted by two or more prepregs. Further, as shown in Illustration 1-8, the arrangement method in which both the P layer and the Q layer are constituted by two or more prepregs is encompassed in the present invention.

The prepreg p1 in the P layer and the prepreg q1 in the Q layer are preferably arranged such that the overlapped area between those prepregs is 10 to 99% to the area of p1 or q1 on the surface at the side that those layers are in contact with each other. When the overlapped area is 10% or more to the area of p1, the effect of improving strength of the welded part is liable to be obtained, and this is preferred. The prepreg p1 and the prepreg q1 are more preferably arranged such that the overlapped area is 40 to 90% to the area of p1 or q1 on the surface at the side that those layers are in contact with each other. The overlapping of the area between each P layer and each Q layer may be not necessary to the same, and may differ depending on each layer.

Specific examples (sectional view) of the arrangement method of prepregs are described in the following 1) to 9). Unless otherwise indicated, the length in depth of each prepreg in each view is the same.

1) The number of layering is two layers which are P layer and Q layer, two prepregs which are not contact with each other in the layer are present in the Q layer, and when the area of the surface at the Q layer side of the prepreg arranged in the P layer is 100%, the area of the prepregs arranged in the Q layer, overlapping with the P layer is 80% (Illustration 1-1).

2) The number of layering is three layers constituted by P layers and Q layer, two prepregs which are not contact with each other are present in the Q layer corresponding to the intermediate layer, and when the area of the surface at the Q layer side of the prepreg arranged in the P layer is 100%, the area of the prepregs arranged in the Q layer, overlapping with the P layer is 90% (Illustration 1-2).

3) The number of layering is three layers constituted by P layer and Q layers, two prepregs are present in the respective Q layers corresponding to the outermost layers, and when the area of the surface at the Q layer side of the prepreg arranged in the P layer is 100%, the area of the prepregs arranged in the Q layer, overlapping with the P layer is 90% (Illustration 1-3).

4) The number of layering is five layers, two prepregs are present in the respective Q layers corresponding to the outermost layers and the Q layer corresponding to an intermediate layer, and when the area of the surface at the Q layer side of a prepreg arranged in the P layer is 100%, the area of the prepregs arranged in the Q layer, overlapping with the P layer is 75% (Illustration 1-4).

5) The number of layering is five layers, two prepregs are present in the respective Q layers corresponding to intermediate layers, and when the area of the surface at the Q layer side of a prepreg arranged in the P layer is 100%, the area of the prepregs arranged in the Q layer, overlapping with the P layer is 70% (Illustration 1-5).

6) The number of layering is three layers constituted by P layers and Q layer, three prepregs which are not in contact with each other are present in the Q layer corresponding to the intermediate layer, and when the area of the surface at the Q layer side of the prepreg arranged in the P layer is 100%, the area of the prepregs arranged in the Q layer, overlapping with the P layer is 80% (Illustration 1-6).

7) The number of layering is five layers, two prepregs are present in the respective Q layers corresponding to intermediate layers, and when the area of the surface at the Q layer side of a prepreg arranged in the P layer is 100%, the area of the prepregs arranged in the Q layer, overlapping with the P layer is 50% (Illustration 1-7).

8) The number of layering is two layers which are P layer and Q layer, two prepregs which are not in contact with each other are present in the P layer and the Q layer, and when the area of the surface at the Q layer side of prepregs arranged in the P layer is 100%, the area of the prepregs arranged in the Q layer, overlapping with the P layer is 80% (Illustration 1-8).

9) The number of layering is two layers which are P layer and Q layer, two prepregs which are not in contact with each other in the layer are present in the Q layer, one prepreg in the Q layer overlaps with the P layer using a mold having a step difference in a cavity, and when the area of the surface at the Q layer side of the prepreg arranged in the P layer is 100%, the area of the prepregs arranged in the Q layer, overlapping with the P layer is 60% (Illustration 1-9).

As shown in Illustration 1-9, the method of arranging at least one prepreg constituting the P layer, and then arranging at least one prepreg constituting the Q layer so as to overlap with the prepreg constituting the P layer is encompassed in the present invention.

[Constitution of prepreg]

The reinforcing fiber contained in the prepreg of the present invention is not particularly limited, and examples thereof include inorganic fibers such as carbon fiber, glass fiber, stainless steel fiber, alumina fiber and mineral fiber; and organic fibers such as polyether ether ketone fiber, polyphenylene sulfide fiber, polyether sulfone fiber, aramide fiber, polybenzoxazole fiber, polyacrylate fiber, polyketone fiber, polyester fiber, polyamide fiber and polyvinyl alcohol fiber. Above all, at least one selected from the group consisting of carbon fiber, aramide fiber and glass fiber is preferably in uses in which strength and stiffness are required in a shaped product. Of those, the carbon fiber is preferably used in that a composite material having excellent strength, in addition to being lightweight, can be provided, and the carbon fiber using polyacrylonitrile fiber as a precursor (hereinafter simply referred to as polyacrylonitrile carbon fiber or PAN carbon fiber) is particularly preferably.

The average fiber diameter of reinforcing fibers is not particularly limited. For example, in a case of a carbon fiber, the average fiber diameter is preferably 3 to 12 $\mu$m, and more preferably 5 to 7 $\mu$m. In a case of a polyester fiber, the average fiber diameter is preferably 10 to 50 $\mu$m, and more preferably 15 to 35 $\mu$m.

The kind of a thermoplastic resin contained in the prepreg is not particularly limited. Examples of the thermoplastic resin include a vinyl chloride resin, a vinylidene chloride resin, a vinyl acetate resin, a polyvinyl alcohol resin, a polystyrene resin, an acrylonitrile-styrene resin (AS resin), an acrylonitrile-butadiene-styrene resin (ABS resin), an acrylic resin, a methacrylic resin, a polystyrene resin, a polypropylene resin, a polyamide resin (for example, polyamide 6 resin, polyamide 11 resin, polyamide 12 resin, polyamide 46 resin, polyamide 66 and polyamide 610 resin), a polyacetal resin, a polycarbonate resin, a polyester resin (for example, polyethylene terephthalate resin, polyethylene naphthalate resin and polybutylene terephthalate resin), a polyacrylate resin, a polyphenylene ether resin, a polyphenylene sulfide resin, a polysulfone resin, a polyether sulfone resin, a polyether ether ketone resin, a polylactide resin, and the like.

The thermoplastic resin is preferably at least one selected from the group consisting of a polyester resin, a polycarbonate resin, an ABS resin, a polyphenylene sulfide resin, a polyamide resin and a mixture of two or more selected from those resins, more preferably polycarbonate resin, polyester resin, polyamide resin and a mixture of two or more selected from those resins, and still more preferably polyamide resin.

The prepreg used in the present invention is preferably impregnated with the thermoplastic resin into a fiber bundle of the reinforcing fibers and between single fibers, and the impregnation ratio is more preferably 90% or more. The impregnation ratio of the resin into the reinforcing fiber is still more preferably 95% or more. When the impregnation ratio is 90% or more, properties of the composite material and shaped product are liable to reach the required level, and this is preferred.

Functional fillers and additives may be contained in the prepreg in the range that the object of the present invention is not impaired. Examples of the functional fillers and additives include organic/inorganic fillers, a flame retardant, a UV-resistant agent, a pigment, a release agent, a softener, a plasticizer and a surfactant, but not limited to those. High flame retardancy is sometimes required in uses of electronic and electric equipments, and uses of cars. Therefore, flame retardant is preferably contained in the thermoplastic resin. As examples of the flame retardant, conventional flame retardants can be used, the flame retardant used in the present invention is not particularly limited so long as it is a material capable of imparting flame retardancy to the thermoplastic resin of the present invention. Specific examples of the flame retardant include phosphorus flame retardant, nitrogen flame retardant, silicone compound, organic alkali metal salt, organic alkaline earth metal salt and bromine flame retardant. Those flame retardants may be used alone or as mixture of two or more thereof. The content of the flame retardant is preferably 1 to 40 parts by mass, and more preferably 1 to 20 parts by mass, per 100 parts by mass of the resin from the standpoints of the balance of properties, moldability and flame retardancy.

The prepreg in the present invention includes reinforcing fibers having an average fiber length of 3 to 100 mm, and a thermoplastic resin. The reinforcing fibers have a fiber areal weight of preferably 25 to 10,000 g/m$^2$, and more preferably 25 to 3,000 g/m$^2$. The prepreg in the present invention contains a reinforcing fiber bundle (A) constituted by the reinforcing fibers of a critical number of single fiber or more, the critical number being defined by the following formula (1). The ratio of the reinforcing fiber bundle (A) to on the total amount of the reinforcing fibers in the prepreg is preferably 20 vol% or more and less than 99 vol%, and more preferably 20 vol% or more and less than 90 vol%.

In addition to the above requirements, an average number (N) of fibers in the reinforcing fiber bundle (A) preferably satisfies the following formula (2).

$$\text{Critical number of single fiber} = 600/D \qquad (1)$$

$$0.7 \times 10^4/D^2 < N < 1 \times 10^5/D^2 \qquad (2)$$

(Here, D is an average fiber diameter ($\mu$m) of single reinforcing fibers.)

A state of single fiber or fiber bundle constituted by less than the critical number of single fiber is preferably present as a reinforcing fiber other than the reinforcing fiber bundle (A) in the prepreg used in the present invention. That is, the prepreg used in the present invention preferably contains the reinforcing fiber bundle constituted by a specific number or more of reinforcing fibers having a controlled opening extent, in which the amount of the reinforcing fiber bundle constituted by the reinforcing fibers of a critical number of single fiber or more, the critical number being defined depending on an average fiber diameter, is 20 vol% or less and less than 99 vol%, and other opened reinforcing fibers, in a specific ratio. When the ratio of the reinforcing fiber bundle (A) is 20 vol% or more based on the total amount of the reinforcing fibers, a shaped product having excellent mechanical property is liable to be obtained, and this is preferred. When the ratio of the reinforcing fiber bundle (A) is less than 99 vol%, entanglement part of fibers is difficult to locally increase its thickness, and a thin-walled shaped product is liable to be obtained, which is preferred.

In the prepreg used in the present invention, the average number (N) of fibers in the reinforcing fiber bundle (A) constituted by the reinforcing fibers of the critical number more of single fiber or more preferably satisfies the above formula (2).

Specifically, where a reinforcing fiber in a prepreg is a carbon fiber and an average fiber diameter of the carbon fiber is 5 to 7 $\mu$m, the critical number of single fiber is 86 to 120, and where the average fiber diameter of the carbon fiber is 5 $\mu$m, the average number of fibers in the fiber bundle is a range of 280 to 4,000. Above all, the average number of fibers is preferably 600 to 1,600. Where the average fiber diameter of the carbon fiber is 7 $\mu$m, the average number of fibers in the fiber bundle is a range of 142 to 2,040. Above all, the average number of fibers is preferably 300 to 800.

When the average number (N) of fibers in the reinforcing fiber bundle (A) is $0.7 \times 10^4/D^2$ or more, high fiber volume fraction (Vf) is liable to be obtained, and this is preferred. When the average number (N) of fibers in the reinforcing fiber bundle (A) is less than $1 \times 10^5/D^2$, a thick-wall portion is difficult to be locally formed, and voids are difficult to be generated. Therefore, this is preferred.

The thickness of the prepreg in the present invention is 0.3 to 5.0 mm. Where the thickness of the prepreg is less than 0.3 mm, the prepreg is difficult to fluidize during molding, and this is not preferred. Where the thickness of the prepreg is larger than 5.0 mm, it becomes difficult to uniformly heat the prepreg during molding, and this is not preferred. The thickness of the prepreg is preferably 1.0 mm to 3.0 mm, and more preferably 1.5 mm to 2.5 mm, from the standpoints that uniform heating is easily conducted and the prepreg has better fluidity.

The reinforcing fiber contained in the prepreg in the present invention is discontinuous, and has an average fiber length of 3 to 100 mm. The prepreg used in the present invention is characterized in that reinforcing fibers having a certain length are contained and reinforcing function can be developed. The average fiber length of the reinforcing fibers is preferably 5 mm or more and 100 mm or less, more preferably 5 mm or more and 50 mm or less, still more preferably 8 mm or more and 50 mm or less, still further preferably 15 mm or more and 80 mm or less, and further 10 mm or more and 30 mm or less.

The reinforcing fiber contained in the prepreg in the present invention is preferably a mat-shaped material (reinforcing mat), and particularly preferably a reinforcing mat obtained by spraying and depositing reinforcing fibers or obtained by using a wet paper-making method. A material obtained by mixing or stacking a thermoplastic resin with or on the reinforcing fiber mat can be used as a precursor of the prepreg. In the present invention, the precursor of the prepreg is sometimes called a random mat.

The reinforcing fiber mat is preferably that the reinforcing fibers contained satisfies the ratio of the reinforcing fiber bundle (A) described above and the formula (2) relating to the average number (N) of fibers. However, the reinforcing fiber mat may be, for example, a mat that does not satisfies those requirements and a mat obtained by shaping unopened reinforcing fibers into a mat form.

[Production step of prepreg]

Production process of the prepreg is not particularly limited. For example, the prepreg can be obtained by heating and pressurizing a product in a state that reinforcing fibers and a thermoplastic resin has been overlaid or a product in which a thermoplastic resin powder has been mixed with a reinforcing fiber mat (this prepreg is hereinafter referred to as an "impregnated shaped product"). The heating temperature is a temperature of a melting point or higher where the thermoplastic resin is crystalline, and is a glass transition temperature or higher where the thermoplastic resin is amorphous. The heating method can utilize oil, an electric heater, induction heating, steam or the like, and can further use a combination of those. The pressurization method can utilize pressurization by a press machine, pressurization by a steel belt, pressurization by rollers, and the like. A press machine is preferably used to obtain a stable impregnated shaped product.

After completion of the heating and pressurization, the temperature of the impregnated shaped product is cooled to a solidification temperature or lower. In this case, pressure may be applied and may not be applied. However, to obtain a uniformly impregnated shaped product, pressure is preferably applied during cooling.

The prepreg in the present invention may not use a prepreg that has been completely impregnated with a thermoplastic resin, and can use a prepreg having a ratio of impregnation of 50 to 100%. However, a prepreg completely impregnated with a thermoplastic resin is preferably used. The ratio of impregnation can be obtained by considering a volume of the impregnated shaped product as 100%, obtaining a volume of the air contained in the impregnated shaped product and subtracting the volume of the air from the volume of the impregnated shaped product.

[Manufacturing method of composite shaped product]

The composite shaped product of the present invention can be preferably obtained by conducting a method including the following cold press steps i) to v) in order.

i) The prepreg is heated to a melting temperature or higher. In this case, the prepreg may be arranged in the method described in "Arrangement method of prepreg" described above and then heated, may be arranged simultaneously with heating, and may be heated and then arranged. The prepreg is preferably heated and then arranged in a desired position from that the prepreg can be uniformly heated and moldability becomes stable. The term "melting temperature or higher" means a melting point or higher where the thermoplastic resin constituting the prepreg is a crystalline resin and means a glass transition temperature or higher where the thermoplastic resin is an amorphous resin. The heating method can use an infrared heater, a hot air circulating type heater, induction heating or the like. The infrared heater capable of performing uniform heating and increasing heating rate is preferably used. The place where the prepreg is arranged is a place where press molding is conducted, such as a place in a mold, as described hereinafter. A plurality of the prepregs arranged may use prepregs having the same content of reinforcing fibers, and may use prepregs having different content of reinforcing fibers. Furthermore, sizes of the prepregs may be all the same, and may be partially different.

ii) To press-mold prepregs heated and provided at desired places, the prepregs are generally arranged in a mold. In this case, a temperature of the mold is not particularly limited so long as a solidification temperature or lower of the thermoplastic resin, that is, the crystallization temperature or lower where the thermoplastic resin is a crystalline resin and the temperature is a glass transition temperature or lower where the thermoplastic resin is an amorphous resin. However, to stabilize a molding step and to prevent the decrease in temperature of the prepreg, it is preferred to adjust the temperature. The temperature may be maintained at a constant temperature, and may be controlled by raising and lowering.

iii) The mold is then clamped. After completion of the mold clamping, heat-exchange of the prepregs provided in the mold is conducted, and to sufficiently solidify the prepregs, a given pressure is applied, and the state is maintained for a certain period of time, for example, generally several seconds to several minutes. The pressure is, for example, 0.5 to 30 MPa. The prepregs fluidize in the mold and are then shaped into a shape of the mold.

iv) The mold is opened, and the shaped product is removed by an ejector pin.

v) Thus, the composite shaped product molded can be removed from the mold.

A so-called hot press molding in which a mold is heated to a melting temperature or higher of the thermoplastic resin in the prepregs, thereby a temperature of the prepregs is also the melting temperature or higher, and the press molding is conducted, can be employed in the manufacturing method of the present invention. In this case, the pressure of the press molding can employ the same conditions as in the cold press.

The upper limit of the temperature of the prepregs during press molding in the manufacturing method of the present invention is not strictly limited, but is preferably the decomposition temperature or lower of the thermoplastic resin contained the prepregs. A thermal decomposition temperature in the air can be exemplified as the decomposition temperature.

[Shaped product]

According to the present invention, weld strength can be improved and controlled in a state of maintaining high fluidity of the prepreg by, for example, arranging the prepregs as above. In particular, regarding the strength, when strength of the shaped product molded from only one prepreg in each layer is 100 (%), if the strength (relative value) of the welded part of the shaped product obtained by arranging prepregs in the manner of the above-described "Arrangement method of prepregs" is 20 to 90 (%), the strength can be optionally controlled by the arrangement method of prepregs, and this is preferred. The representative examples of the strength include tensile strength and bending strength.
Additionally, when elasticity of the molded product molded from only one prepreg in each layer is 100 (%), if the strength (relative value) of the welded part of the shaped product obtained by arranging prepregs in the manner of the above-described "Arrangement method of prepregs" is 60 to 100 (%), the decrease in elasticity is small as compared with the decrease in strength, and this means that elasticity is hard to be affected by the arrangement method. This case is preferred. Therefore, rigidity of the shaped product can be maintained, and the strength of the welded part can be optionally designed. As a result, the present invention can be applied to the manufacturing of a shaped product requiring the characteristics that a site that is desired to be broken can be selectively broken by shock such as collision. Such a shaped product can be preferably used in a hood for a car, an air-bag cover and the like. The representative examples of the elasticity include tensile modulus and bending modulus.
Needless to say, the term "a shaped product molded from only one prepreg in each layer" described as the basis of strength and elasticity means a shaped product having the same shape as the shaped product obtained by arranging two or more prepregs so as not to be in contact with each other in at least any one of P layer and the Q layer by the manufacturing method of the present invention, obtained using only one sheet of the same prepreg as above in the layer.

Examples

In the examples, PAN type carbon fiber bundle was used as a reinforcing fiber. Details of other elements are shown below.

<Shaped product>

Shaped products in the following examples and comparative examples have a size of 300 mm × 200 mm and a thickness of 3 mm to 5 mm, and press molding was conducted using a mold having a size corresponding to the shaped products.

<Evaluation method of welded part of shaped product>

Regarding conditions not particularly described in the shaped products obtained in the following examples and comparative examples, a test piece was cut out such that a welded part locates at the center according to JIS K 7164, a tensile test was conducted, and tensile strength and tensile modulus were obtained. In Comparative Example 1, the same tensile test as above was conducted using the shaped product (Comparative Example 1) having the same shape as in other examples and comparative examples, except that a welded part is not present, obtained by conducting the molding in the arrangement that only one prepreg is arranged in the layer. Its tensile strength and tensile modulus were defined as 100%, respectively, and a relative value (%) of tensile strength and a relative value (%) of tensile modulus in other examples and comparative examples were calculated.

[Manufacturing Example 1]

A carbon fiber bundle (TENAX IMS60-12K (average fiber diameter: 5 μm, fiber width: 6 mm)) manufactured by Toho Tenax Co., Ltd.) was cut into a length of 20 mm, and introduced in a taper tube in a supply amount of carbon fibers of 1,222 g/min. While partially opening the fiber bundle by blowing air to the carbon fibers in the taper tube, the carbon fibers were sprayed on a table provided in a lower part of an outlet of the taper tube. The table was moved in a given rate, and fiber areal weight of the carbon fibers was adjusted so as to be the value described hereinafter. PA66 fibers (polyamide 66 fiber manufactured by Asahi Kasei Fibers Corporation: T5 Nylon (tex: 1,400 dtex), melting point: 265°C, thermal decomposition temperature (in air): 300°C) dry-cut into a length of 2 mm were supplied as a matrix resin to the taper tube in a supply amount of 3,000 g/min, and sprayed together with the carbon fibers at the same time. Thus, a precursor (random mat) of a prepreg, in which the carbon fibers having an average fiber length of 20 mm and the polyamide 66 were mixed, was obtained. Two kinds of random mats having fiber areal weight of the carbon fibers of 300 g/m$^2$ and 380 g/m$^2$ were obtained by the above procedures. An average fiber length (La), a ratio of the reinforcing fiber bundle (A) and an average number of fibers (N) in those random mats were examined. As a result, the average fiber length was 20 mm, the critical number of single fiber defined by the above formula (1) was 120, the ratio of the reinforcing fiber bundle (A) to the total amount of the fibers in the mat was 86 vol%, and the average number (N) of fibers in the reinforcing fiber bundle (A) was 900. Two random mats each having fiber areal weight of carbon fibers of 300 g/m$^2$ were stacked, arranged in a flat plate-shaped mold, and pressurized under a pressure of 3 MPa at 300°C for 5 minutes. The mold was cooled to 100°C and a prepreg having a thickness of 1.7 mm was prepared. One random mat having fiber areal weight of carbon fibers of 380 g/m$^2$ was arranged in a flat plate-shaped mold, and pressurized under a pressure of 3 MPa at 300°C for 5 minutes. The mold was cooled to 100°C and a prepreg having a thickness of 1 mm was prepared. The average fiber length of carbon fibers, the ratio of reinforcing fiber bundle (A) and the average number of fibers (N) in the prepreg were the same values as in the random mat obtained above.

[Manufacturing Example 2]

A carbon fiber bundle (TENAX STS40-24KS (average fiber diameter: 7 $\mu$m, fiber width: 12 mm) manufactured by Toho Tenax Co., Ltd.) was cut into a length of 20 mm, and introduced in a taper tube in a supply amount of carbon fibers of 1,222 g/min. While partially opening the fiber bundle by blowing air to the carbon fibers in the taper tube, the carbon fibers were sprayed on a table provided in a lower part of an outlet of the taper tuber. The table was moved in a given rate, and fiber areal weight of the carbon fibers was adjusted so as to be the value described hereinafter. A polycarbonate resin (PANLITE manufactured by Teijin Chemicals Limited, glass transition temperature: 150°C, thermal decomposition temperature (in air): 340°C)) was supplied as a matrix resin to the taper tube in a supply amount of 3,000 g/min, and sprayed together with the carbon fibers at the same time. Thus, a prepreg precursor (random mat) in which the carbon fibers having an average fiber length of 20 mm and the polycarbonate resin were mixed was obtained. The fiber areal weight of the carbon fibers in the random mat obtained was 300 g/m$^2$. An average fiber length (La), a ratio of the reinforcing fiber bundle (A) and an average number of fibers (N) in the random mat were examined. As a result, the average fiber length was 20 mm, the critical number of single fiber defined by the above formula (1) was 86, the ratio of the reinforcing fiber bundle (A) to the total amount of the fibers in the mat was 60 vol%, and the average number (N) of fibers in the reinforcing fiber bundle (A) was 500. Two random mats obtained were stacked, arranged in a flat plate-shaped mold, and pressurized under a pressure of 3 MPa at 310°C for 5 minutes. The mold was cooled to 100°C and a prepreg having a thickness of 1.7 mm was prepared.
The average fiber length of carbon fibers, the ratio of the reinforcing fiber bundle (A) and the average number of fibers (N) in the prepreg were the same values as in the random mat obtained above.

[Manufacturing Example 3]

A carbon fiber bundle (TENAX STS40-24KS (average fiber diameter: 7 $\mu$m, fiber width: 12 mm) manufactured by Toho Tenax Co., Ltd.) was cut into a length of 20 mm, and introduced in a taper tube in a supply amount of the carbon fibers of 1,222 g/min. While partially opening the fiber bundle by blowing air to the carbon fibers in the taper tube, the carbon fibers were sprayed on a table provided in a lower part of an outlet of the taper tuber. The table was moved in a given rate, and fiber areal weight of the carbon fibers was adjusted so as to be the value described hereinafter. A PBT (polybutylene terephthalate, DURANEX manufactured by Polyplastics Co., Ltd., melting point: 220°C, thermal decomposition temperature (in air): 300°C) was supplied as a matrix resin to the taper tube in a supply amount of 3,000 g/min, and sprayed together with the carbon fibers at the same time. Thus, a prepreg precursor (random mat) in which the carbon fibers having an average fiber length of 20 mm and the PBT resin were mixed was obtained. The fiber areal weight of the carbon fibers in the random mat obtained was 300 g/m$^2$. An average fiber length (La), a ratio of the reinforcing fiber bundle (A) and an average number of fibers (N) in the mat were examined. As a result, the average fiber length was 20 mm, the critical number of single fiber defined by the above formula (1) was 86, the ratio of the reinforcing fiber bundle (A) to the total amount of the fibers in the random mat was 50 vol%, and the average number (N) of fibers in the reinforcing fiber bundle (A) was 400. Two random mats obtained were stacked, arranged in a flat plate-shaped mold, and pressurized under a pressure of 2.5 MPa at 270°C for 5 minutes. The mold was cooled to 100°C and a prepreg having a thickness of 1.7 mm was prepared.
The average fiber length of the carbon fibers, the ratio of the reinforcing fiber bundle (A) and the average number of fibers (N) in the prepreg were the same values as in the random mat obtained above.

[Example 1]

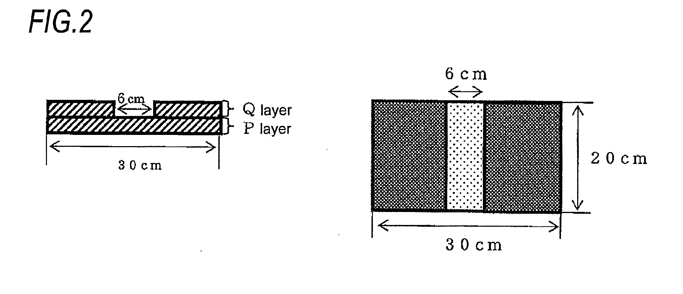

Three prepregs each having a thickness of 1.7 mm prepared in Manufacturing Example 1 were heated in an infrared heating furnace until the surface temperature reaches 300°C, and arranged as shown in Fig. 2. In this case, when the area of the surface at Q layer side of the prepreg arranged in P layer was 100%, the prepregs were arranged such that the area of the prepregs arranged in the Q layer, overlapped with the P layer is 80%. After the arrangement, the prepregs were conveyed into a mold, and pressurized under a pressure of 10 MPa for 1 minute. The mold temperature at this time was 130°C. After the lapse of 1 minute, the mold was opened, and a shaped product having a thickness of 3.0 mm was taken out of the mold. The result obtained by conducting a tensile test of a welded part of the shaped product obtained is shown in Table 1. A linear welded part (weld line) was confirmed on the surface at the Q layer side. However, unevenness was not observed, and the weld line was not almost remarkable on the surface at the P layer side.

[Example 2]

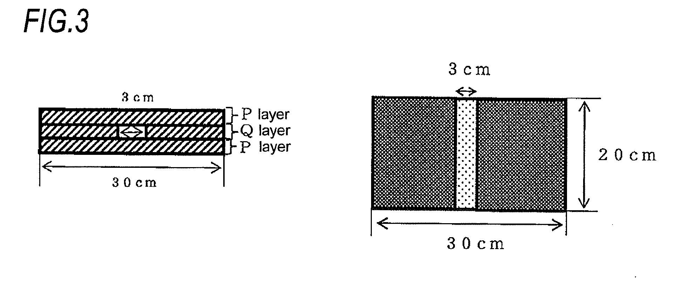

Four prepregs each having a thickness of 1.7 mm prepared in Manufacturing Example 1 were heated in an infrared heating furnace until the surface temperature reaches 300°C, and arranged as shown in Fig. 3. In this case, when the area of the surface at Q layer side of the prepreg arranged in P layer was 100%, the prepregs were arranged such that the area of the prepregs arranged in the Q layer, overlapped with the P layer is 90%. After the arrangement, the prepregs were conveyed into a mold, and pressurized under a pressure of 10 MPa for 1 minute. The mold temperature at this time was 130°C. After the lapse of 1 minute, the mold was opened, and a shaped product having a thickness of 4.9 mm was taken out of the mold. The result obtained by conducting a tensile test of a welded part of the shaped product obtained is shown in Table 1. A weld line was not almost remarkable on the surface of the shaped product.

[Example 3]

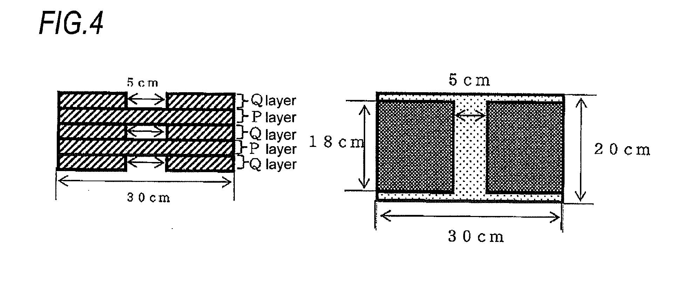

Eight prepregs each having a thickness of 1.0 mm prepared in Manufacturing Example 1 were heated in an infrared heating furnace until the surface temperature reaches 300°C, and arranged as shown in Fig. 4. In this case, when the area of the surface at Q layer side of the prepreg arranged in P layer was 100%, the prepregs were arranged such that the area of the prepregs arranged in the Q layer, overlapped with the P layer is 75%. After the arrangement, the prepregs were conveyed into a mold, and pressurized under a pressure of 10 MPa for 1 minute. The mold temperature at this time was 130°C. After the lapse of 1 minute, the mold was opened, and a shaped product having a thickness of 4.2 mm was taken out of the mold. The result obtained by conducting a tensile test of a welded part of the shaped product obtained is shown in Table 1. A weld line was confirmed on the surface of the shaped product, but unevenness was not observed on the surface thereof.

[Example 4]

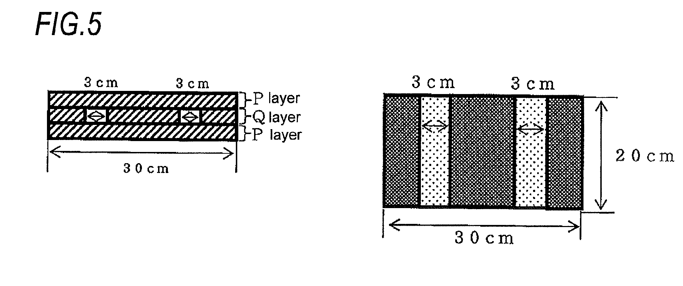

Five prepregs each having a thickness of 1.7 mm prepared in Manufacturing Example 1 were heated in an infrared heating furnace until the surface temperature reaches 300°C, and arranged as shown in Fig. 5. In this case, when the area of the surface at Q layer side of the prepreg arranged in P layer was 100%, the prepregs were arranged such that the area of the prepregs arranged in the Q layer, overlapped with the P layer is 80%. After the arrangement, the prepregs were conveyed into a mold, and pressurized under a pressure of 10 MPa for 1 minute. The mold temperature at this time was 130°C. After the lapse of 1 minute, the mold was opened, and a shaped product having a thickness of 4.7 mm was taken out of the mold. The result obtained by conducting a tensile test of a welded part of the shaped product obtained is shown in Table 1. A weld line was not remarkable on the surface of the shaped product.

[Example 5]

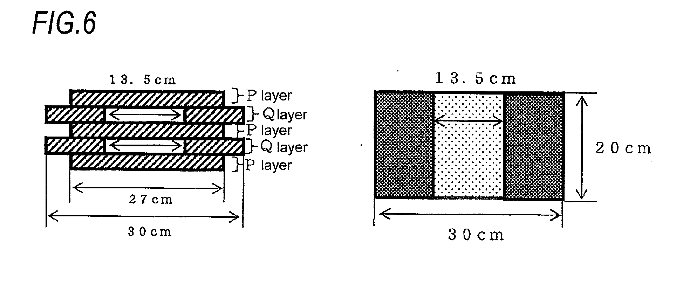

Seven prepregs each having a thickness of 1.0 mm prepared in Manufacturing Example 1 were heated in an infrared heating furnace until the surface temperature reaches 300°C, and arranged as shown in Fig. 6. In this case, when the area of the surface at Q layer side of the prepreg arranged in P layer was 100%, the prepregs were arranged such that the area of the prepregs arranged in the Q layer, overlapped with the P layer is 50%. After the arrangement, the prepregs were conveyed into a mold, and pressurized under a pressure of 10 MPa for 1 minute. The mold temperature at this time was 130°C. After the lapse of 1 minute, the mold was opened, and a shaped product having a thickness of 4.5 mm was taken out of the mold. The result obtained by conducting a tensile test of a welded part of the shaped product obtained is shown in Table 1. A weld line was slightly confirmed on the surface of the shaped, but unevenness was not observed on the surface, and the appearance was good.

[Example 6]

Four prepregs each having a thickness of 1.7 mm prepared in Manufacturing Example 2 were heated in an infrared heating furnace until the surface temperature reaches 310°C, and arranged as shown in Fig. 3. In this case, when the area of the surface at Q layer side of the prepreg arranged in P layer was 100%, the prepregs were arranged such that the area of the prepregs arranged in the Q layer, overlapped with the P layer is 90%. After the arrangement, the prepregs were conveyed into a mold, and pressurized under a pressure of 10 MPa for 1 minute. The mold temperature at this time was 120°C. After the lapse of 1 minute, the mold was opened, and a shaped product having a thickness of 4.9 mm was taken out of the mold. The result obtained by conducting a tensile test of a welded part of the shaped product obtained is shown in Table 1. A weld line was not remarkable on the surface of the shaped product.

[Example 7]

Four prepregs each having a thickness of 1.7 mm prepared in Manufacturing Example 3 were heated in an infrared heating furnace until the surface temperature reaches 280°C, and arranged as shown in Fig. 3. In this case, when the area of the surface at Q layer side of the prepreg arranged in P layer was 100%, the prepregs were arranged such that the area of the prepregs arranged in the Q layer, overlapped with the P layer is 90%. After the arrangement, the prepregs were conveyed into a mold, and pressurized under a pressure of 10 MPa for 1 minute. The mold temperature at this time was 130°C. After the lapse of 1 minute, the mold was opened, and a shaped product having a thickness of 4.9 mm was taken out of the mold. The result obtained by conducting a tensile test of a welded part of the shaped product obtained is shown in Table 1. A weld line was not remarkable on the surface of the shaped product.

[Comparative Example 1]

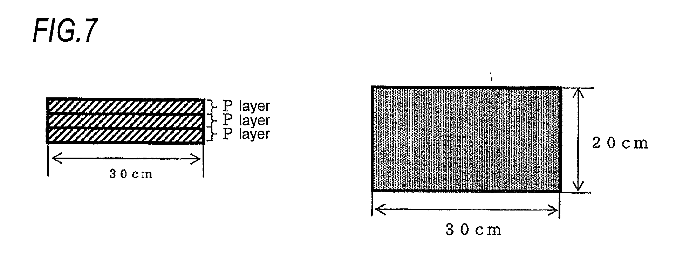

Three prepregs each having a thickness of 1.7 mm prepared in Manufacturing Example 1 were heated in an infrared heating furnace until the surface temperature reaches 300°C. Three layers of the prepregs were arranged as only P layers as shown in Fig. 7, conveyed into a mold, and pressurized under a pressure of 10 MPa for 1 minute. The mold temperature at this time was 130°C. After the lapse of 1 minute, the mold was opened, and a shaped product having a thickness of 5.0 mm was taken out of the mold. The result obtained by conducting a tensile test of the shaped product obtained is shown in Table 1.

[Comparative Example 2]

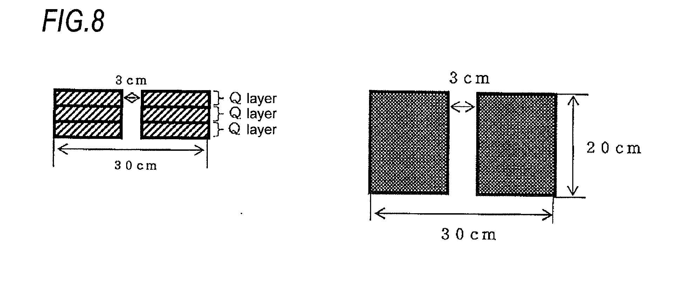

Six prepregs each having a thickness of 1.7 mm prepared in Manufacturing Example 1 were heated in an infrared heating furnace until the surface temperature reaches 300°C. Three layers of the prepregs were arranged as only Q layers as shown in Fig. 8, conveyed into a mold, and pressurized under a pressure of 10 MPa for 1 minute. The mold temperature at this time was 130°C. After the lapse of 1 minute, the mold was opened, and a shaped product having a thickness of 4.6 mm was taken out of the mold. The result obtained by conducting a tensile test of a welded part of the shaped product obtained is shown in Table 1. A weld line was confirmed on the surface of the shaped product, and unevenness was observed on the surface thereof.

Table 1

| | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|
| Tensile strength (MPa) | 154 | 224 | 112 | 208 | 123 | 235 | 210 | 260 | 46 |
| Relative value of tensile strength (%) | 59 | 86 | 43 | 80 | 47 | 90 | 81 | 100 | 17 |
| Tensile modulus (GPa) | 17 | 19 | 18 | 17 | 18 | 20 | 19 | 23 | 15 |
| Relative value of tensile modulus (%) | 74 | 83 | 78 | 74 | 78 | 87 | 83 | 100 | 65 |

From the above, as compared with Comparative Example 1 (100%) in which a welded part is not present and Comparative Example 2 in which a welded part is formed by the ordinary layering, according to the present invention, the decrease in elasticity is small as compared with the case where a welded part is not present, a welded part can be designed to a desired position, and strength can be set to an optional value, as in Examples 1 to 7.

Industrial Applicability

According to the present invention, a method for manufacturing a shaped product, in which a wide variety of thermoplastic resins can be used, productivity is excellent, a welded part is formed at an optional place of the shaped product without decreasing fluidity of a prepreg during a press molding, appearance of the welded part can be improved and the welded part has excellent strength, and a shaped product can be provided. Furthermore, because appearance and strength of the welded part can be improved by the present invention, a large-sized shaped product can be also manufactured. Additionally, because strength of the welded part can be changed and controlled, optionally and at a desired portion, in the present invention, a shaped product having characteristics extremely preferred for use in, for example, a hood of a car, an air-bag cover and the like such that when the shaped product is strongly shocked, breakage occurs at an optional site (welded part) and the site has sufficient strength in general use can be manufactured.

Although the present invention has been described in detail and by reference to the specific embodiments, it is apparent to one skilled in the art that various modifications or changes can be made without departing the spirit and scope of the present invention.

This application is based on Japanese Patent Application No. 2011-281508 filed December 22, 2011, the disclosure of which is incorporated herein by reference.

**Claims**

1. A method for manufacturing a shaped product, comprising:

   1) heating at least three prepregs having a thickness of 0.3 mm to 5.0 mm, each including reinforcing fibers having an average fiber length of 3 to 100 mm and a thermoplastic resin;
   2) arranging the prepregs so as to constitute at least two layers including a P layer and a Q layer which are in contact with each other; and then
   3) pressing the layers to manufacture one shaped product,
   **characterized in that** a prepreg (p1) in the P layer and a prepreg (q1) in the Q layer are arranged such that at least a part of the P layer and the Q layer overlaps with each other and two or more prepregs are not in contact with each other in the same layer.

2. The method for manufacturing a shaped product according to claim 1, **characterized in that** the two or more prepregs arranged so as not to be in contact with each other in the same layer are fluidized during the pressing.

3. The method for manufacturing a shaped product according to claim 1 or 2, **characterized in that** an welded part is formed in the shaped product by fluidization of the two or more prepregs arranged so as not to be in contact with each other in the same layer of at least one of the P layer and the Q layer.

4. The method for manufacturing a shaped product according to any one of claims 1 to 3, wherein the P layer uses one prepreg, the Q layer uses at least two prepregs, and the prepregs in the P layer and the Q layer are arranged so as to constitute two or more layers as a whole.

5. The method for manufacturing a shaped product according to any one of claims 1 to 4, wherein the prepregs are arranged so as to constitute three or more layers as a whole.

6. The method for manufacturing a shaped product according to any one of claims 1 to 5, wherein the P layer uses one prepreg, the Q layer uses at least two prepregs, and the prepregs in the P layer and the Q layer are arranged so as to constitute three or more layers as a whole.

7. The method for manufacturing a shaped product according to any one of claims 1 to 5, wherein the P layer uses at least two prepregs, the Q layer uses one prepreg, and the prepregs in the P layer and the Q layer are arranged so as to constitute three or more layers as a whole.

8. The method for manufacturing a shaped product according to any one of claims 1 to 5, wherein the P layer uses at least two prepregs, the Q layer uses at least two prepregs, and the prepregs in the P layer and the Q layer are arranged so as to constitute two or more layers as a whole.

9. The method for manufacturing a shaped product according to any one of claims 1 to 8, wherein at least one prepreg constituting the P layer is arranged, and then at least one prepreg constituting the Q layer is arranged so as to overlap with the prepreg constituting the P layer.

10. The method for manufacturing a shaped product according to any one of claims 1 to 9, wherein the prepreg (p1) in the P layer and the prepreg (q1) in the Q layer are arranged such that an overlapped area between those prepregs is 10 to 99% to an area of p1 or q1 on a surface at a side where the P layer and the Q layer overlap with each other.

11. The method for manufacturing a shaped product according to any one of claims 1 to 10,
wherein the prepreg contains a reinforcing fiber bundle (A) constituted by the reinforcing fibers of a critical number of single fiber or more, the critical number being defined by the following formula (1), and a ratio of the reinforcing fiber bundle (A) to a total amount of the reinforcing fibers in the prepreg is 20 vol% or more and less than 99 vol%:

$$\text{Critical number of single fiber} = 600/D \qquad (1)$$

wherein D is an average fiber diameter ($\mu$m) of single reinforcing fibers.

12. The method for manufacturing a shaped product according to claim 11, wherein an average number (N) of fibers in the reinforcing fiber bundle (A) in the prepreg satisfies the following formula (2):

$$0.7 \times 10^4/D^2 < N < 1 \times 10^5/D^2 \qquad (2)$$

wherein D is an average fiber diameter ($\mu$m) of single reinforcing fibers.

13. The method for manufacturing a shaped product according to any one of claims 1 to 12,
wherein the reinforcing fibers are at least one selected from the group consisting of a carbon fiber, an aramid fiber and a glass fiber.

14. The method for manufacturing a shaped product according to any one of claims 1 to 13,
**characterized in that** a ratio between the reinforcing fibers and the thermoplastic resin present in the prepreg is that the thermoplastic resin is 100 to 1,000 parts by volume per 100 parts by volume of the reinforcing fibers.

15. A shaped product obtained by the method for manufacturing a shaped product according to any one of claims 1 to 14,
**characterized in that** strength of a welded part is 20 to 90% when strength of the shaped product molded from only one prepreg in all the same layer is 100%.

# FIG.1

**Illustration 1-1**

}- Q layer
}- P layer

**Illustration 1-2**

}- P layer
}- Q layer
}- P layer ·

**Illustration 1-3**

}- Q layer
}- P layer
}- Q layer

**Illustration 1-4**

}- Q layer
}- P layer
}- Q layer
}- P layer
}- Q layer

**Illustration 1-5**

}- P layer
}- Q layer
}- P layer
}- Q layer
}- P layer

**Illustration 1-6**

}- P layer
}- Q layer
}- P layer

**Illustration 1-7**

}- P layer
}- Q layer
}- P layer
}- Q layer
}- P layer

**Illustration 1-8**

}- Q layer
}- P layer

**Illustration 1-9**

Mold

}- Q layer
}- P layer

14

FIG.2

6 cm
Q layer
P layer
30 cm

6 cm
20 cm
30 cm

FIG.3

3 c m

P layer
Q layer
P layer

30 cm

3 c m

20 cm

30 cm

16

*FIG.4*

FIG.5

3 cm     3 cm    P layer
Q layer
P layer
30 cm

3 cm     3 cm
20 cm
30 cm

FIG.6

*FIG.7*

P layer
P layer
P layer

30 cm

20 cm

30 cm

## FIG.8

3 cm

Q layer
Q layer
Q layer

30 cm

3 cm

20 cm

30 cm

## INTERNATIONAL SEARCH REPORT

International application No.

PCT/JP2012/083131

| A. CLASSIFICATION OF SUBJECT MATTER |
|---|
| B29C70/06(2006.01)i, B29C43/34(2006.01)i, C08J5/24(2006.01)i |

According to International Patent Classification (IPC) or to both national classification and IPC

| B. FIELDS SEARCHED |
|---|

Minimum documentation searched (classification system followed by classification symbols)
B29C70/00-70/88, B29C43/00-43/58, C08J5/24, B32B1/00-43/00

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2011-178891 A (Teijin Ltd.), 15 September 2011 (15.09.2011), claims; paragraphs [0040], [0041], [0044] to [0047] (Family: none) | 1-15 |
| Y | JP 2007-015203 A (Toray Industries, Inc.), 25 January 2007 (25.01.2007), claim 1; paragraphs [0001] to [0008], [0014], [0026] to [0033]; fig. 3, 5 (Family: none) | 1-15 |
| Y | JP 2009-274412 A (Toray Industries, Inc.), 26 November 2009 (26.11.2009), claims; paragraphs [0083] to [0085], [0089], [0108] to [0111] (Family: none) | 1-15 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 March, 2013 (19.03.13) | 02 April, 2013 (02.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/083131

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-274833 A (Mitsubishi Electric Corp.), 08 October 1999 (08.10.1999), claim 2; paragraphs [0006], [0012], [0013], [0015]; fig. 4 (Family: none) | 1-15 |
| A | JP 2002-248620 A (Toray Industries, Inc.), 03 September 2002 (03.09.2002), claims; paragraphs [0018] to [0021], [0036] to [0039]; fig. 1 to 3 (Family: none) | 1-15 |
| A | JP 2008-069474 A (Teijin Ltd.), 27 March 2008 (27.03.2008), claims 1, 5; paragraphs [0092] to [0100] (Family: none) | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007291161 A
- JP 2011056795 A
- JP 2011281508 A